(19) Europäisches Patentamt
European Patent Office
Office européen des brevets

(11) **EP 1 712 014 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(21) Anmeldenummer: **04765632.7**

(22) Anmeldetag: **27.09.2004**

(51) Int Cl.:
***H04B 5/02*** *(2006.01)*

(86) Internationale Anmeldenummer:
**PCT/EP2004/010806**

(87) Internationale Veröffentlichungsnummer:
**WO 2005/076494 (18.08.2005 Gazette 2005/33)**

(54) **VERFAHREN ZUR DATENÜBERTRAGUNG MITTELS FELDPOLARISATION**

METHOD FOR TRANSMITTING DATA BY MEANS OF FIELD POLARISATION

PROCEDE DE TRANSMISSION DE DONNEES A L'AIDE DE LA POLARISATION DE CHAMP

(84) Benannte Vertragsstaaten:
**AT BE BG CH CY CZ DE DK EE ES FI FR GB GR HU IE IT LI LU MC NL PL PT RO SE SI SK TR**

(30) Priorität: **06.02.2004 EP 04002614**

(43) Veröffentlichungstag der Anmeldung:
**18.10.2006 Patentblatt 2006/42**

(73) Patentinhaber: **Siemens Schweiz AG
8047 Zürich (CH)**

(72) Erfinder: **SCHMID, Rolf
CH-880 Thalwil (CH)**

(74) Vertreter: **Fischer, Michael
Siemens AG
Patentabteilung
Postfach 22 16 34
80506 München (DE)**

(56) Entgegenhaltungen:
**EP-A- 0 699 573        EP-A- 1 049 080
WO-A-01/18533       US-A- 3 636 508
US-B1- 6 339 611      US-B1- 6 593 900**

## Beschreibung

Die Erfindung bezieht sich auf ein Verfahren zur Datenübertragung mittels Feldpolarisation gemäss dem Oberbegriff des Patentanspruchs 1.

Die vorliegende Erfindung betrifft das Gebiet der drahtlosen Datenübertragung für das Anwendungsgebiet Zugbeeinflussung, Zugerkennung und Zugortung. Um eine sicherheitsrelevante Datenübertragung von schienengebundenen Fahrzeugen zu einem festen Streckenpunkt zu garantieren, d.h. für eine Sicherheitsbetrachtung und einen Sicherheitsnachweis, ist es zwingend erforderlich, die Bitfehlerrate und Datenlink-Performance aufgrund der am Übertragungsort auftretenden elektromagnetischen Störfelder zu kennen und zu quantifizieren. Diese Störfelder resultieren insbesondere aus:

a) Traktionsströmen in Fahrdraht, Schiene und Fahrzeug;
b) Ströme aus den eingesetzten Wirbelstrombremsen.
c) Elektromagnetische Komponenten im Fahrzeug, wie z.B. alle Arten von Motoren und Umrichtern für die Hilfsbetriebe.
d) Resonanzeffekte von metallischen Teilen wie Schwellen und elektrischen Verbindungen

Dabei werden diese Störfelder durch das im Gleisbereich massiv vorhandene Ferro-magnetische Material verändert, insbesondere durch Reflexion, Phasenverschiebungen und durch lokal induzierte Primär- und Sekundärströme.

Die bekannten Datenübertragungsverfahren beruhen darauf, dass einem Trägersignal die zu übertragenden Daten aufmoduliert werden und nach erfolgter Übertragung über die Luftstrecke beim Empfänger demoduliert werden. Die bei der Demodulierung erzielbare Auflösung ist sehr stark abhängig von Pegel und Frequenz der lokalen diskontinuierlichen und kontinuierlichen Störfelder. Da durch die Zugbeeinflussungssysteme sicherheitsrelevante Daten für den Eisenbahnverkehr wie z.B. eine zulässige Höchstgeschwindigkeit oder ein «HALT» zeigendes Signal übermittelt werden, ist eine verbindliche Aussage über den Wahrheitsgehalt der empfangenen und demodulierten Daten erforderlich. Werden durch die diskontinuierlichen und kontinuierlichen Störfelder die Bitfehlerrate des Datenübertragungskanals zu gross, wird die Erkennung der Signalstellung aufgrund der Demodulation des Empfängers unmöglich. Dadurch verringert sich die Verfügbarkeit bzw. die Sicherheit des Zugsicherungssystems.
Einrichtungen zur Datenübertragung zwischen einem schienengebundenen Fahrzeug und auf einem festen Streckenpunkt sind standardisiert und z.B. in [1] spezifiziert. Gemäss [1] ist ein aufwendiges Verfahren für die Nachbearbeitung erforderlich, um Integrität, Authentizität und Interoperabilität der empfangenen Daten sicherzustellen.

Der vorliegenden Erfindung liegt daher die Aufgabe zugrunde, ein Verfahren zur Datenübertragung zwischen einem schienengebundenen Fahrzeug und einem festen Streckenpunkt anzugeben, dass weitgehend immun gegen die im Gleisbereich und/oder Fahrzeugbereich auftretenden diskontinuierlichen und kontinuierlichen Störfelder ist.

Diese Aufgabe wird das im Patentanspruch 1 angegebene Verfahren gelöst.

Durch die erfindungsgemässe Lösung, wonach
der Bitstrom durch eine Modulation der Polarisation des elektromagnetischen Feldes übertragen wird und für jeden der beiden möglichen Werte eines Bits aus dem Bitstrom in einer zur Übertragungsrichtung orthogonalen Polarisationsebene je eine Polarisationsrichtung zugeordnet ist;
ist der Störleistungsabstand nicht mehr vom Auflösungsvermögen einer Frequenz- oder Amplituden-Demodulation abhängig. Der Störleistungsabstand wird durch das Auflösungsvermögen der Feldpolarisation von zwei Ebenen (vertikal und horizontal) bestimmt, welches eine erheblich höhere Störfestigkeit bietet, da der skalare Pegel des abgestrahlten Feldes gegenüber den Pegeln der Störfelder unabhängig auf zwei Polarisationsebenen von den zu übertragenden Daten ist.

Erfindungsgemäss werden die als Bitstrom zu übertragenden Daten nicht mehr auf ein Trägersignal aufmoduliert, sondern in einem hier zweidimensional in je einer zur Übertragungsrichtung (d) orthogonalen Polarisationsebene übertragen.

Für eine zuverlässige, sichere und eine hohe Verfügbarkeit aufweisende Datenübertragung zu erreichen, bietet dieses Verfahren eine optimierte Lösung für alle Umgebungsrote, welche grosse Störpegel «von Natur aus» aufweisen.

Das erfindungsgemässe Verfahren zur Datenübertragung erlaubt, wegen der Kenntnis des Betrages des abgestrahlten Feldes dieses an seinem Empfangsort - sei es am Fahrzeug oder im Gleisbereich - zu messen. Der so gemessene Wert kann nun seinerseits benutzt werden, um ein gemäss dem vorliegenden Verfahren ein polarisiertes Feld mit einem Vielfachen des gemessenen Pegels eine Störfestigkeitsprüfung durchzuführen. Die Bitfehlerrate des Datenübertragungskanals kann somit unabhängig von der Präsenz des Nutzsignals erkannt bzw. ermittelt werden. Dies ist besonders vorteilhaft, da die heutigen einschlägigen Normen wie EN 50159, EN 50121-2 und EN 50121-4 zum Nachweis der Normkonformität bez. Emission ein Verfahren vorschreiben, dass in 10m Abstand von der Gleismitte die betreffende Messung vornimmt. Aus der Normkonformität bezüglich Emission eines Fahrzeuges im Abstand von 10m ergibt sich jedoch keine Aussage über auftretende Feldstärken im unmittelbaren Gleisbereich; das heisst in einem Abstand von etwa 0.5m bis etwa 1.2m. Für den Sicherheitsnachweis von eisenbahntechnischen Komponenten bezüglich Immunität kann so keine Aussage gemacht werden. Hier erlaubt nun in einer Weiterentwicklung des erfindungsgemässen Verfahrens eine Störfestigkeitsprüfung von eisenbahntechnischen Komponenten, die die tatsächlichen Werte beinhaltet; vorzugsweise wird dazu der gemessene Skalar mit einem Faktor m von folgendem Wertebereich versehen:

$$1.5 < m < 20.$$

Der resultierende Wert dient dabei als Pegel für die Immunitätsprüfung gemäss dem erfindungsgemässen Übertragungsverfahren.

Vorteilhafte Ausgestaltungen der Erfindung sind in weiteren Ansprüchen angegeben.

Die Erfindung wird nachfolgend anhand einer Zeichnung beispielsweise näher erläutert. Dabei zeigen:

Figur 1        Lage der Antennen am Fahrzeug und im Gleisbereich;
Figur 2        perspektivische Darstellung der Lage von Rahmenantennen im Gleisbereich;
Figur 3        Darstellung der Aufteilung der Ströme in den Antennen am Fahrzeug und auf dem Gleisbereich;
Figur 4.1      Dimensionierung einer Antenne im Gleisbereich;
Figur 4.2      Ausgestaltung einer Antenne im Gleisbereich mittels Koaxialkabel;
Figur 5        Schaltungstechnische Prinzipdarstellung der Komponenten zur Durchführung des erfindungsgemässen Verfahrens;
Figur 6        Qualitative Darstellung eines Emissionsgrenzwertes gemäss der Norm EN 50121-2.

Zunächst wird der Begriff «Modulation der Polarisation des elektromagnetischen Feldes» soweit erläutert, damit die Funktion der in den Zeichnungen angegebenen Antennen verständlich wird. Elektromagnetische Wellen (Felder) sind im Kontext der vorliegenden Erfindung transversale Wellen, dessen elektrischer und magnetischer Feldvektor senkrecht zur Ausbreitungsrichtung stehen. Dabei ist das E-Feld quer zur Ausbreitung des H-Feldes, die Ebene quer zur vorgenannten Ausbreitung heisst Polarisationsebene. Vorliegend wird die lineare Polarisation betrachtet: Die Richtung des E-Feldes ist konstant, die Amplitude oszilliert zeitlich. In der Polarisationsebene gibt es nun zwei zueinander orthogonale Richtungen, die als horizontal und als vertikal polarisiert bezeichnet werden. Für den Kontext der vorliegenden Erfindung ist es jedoch nicht erforderlich; dass die beiden Ebenen zueinander orthogonal stehen; die Ebenen können geneigt sein um einen Winkelbereich von ca.

$$45° < \alpha < 135°.$$

Dadurch ist eine Selektivität s der Pegel in den beiden Polarisationsrichtungen sichergestellt im Bereich

$$0.7 < s < 1.$$

Der Näherungswert 0.7 ergibt sich aus sin(45°) bzw. aus sin(135°) aus $\sqrt{2}/2$.

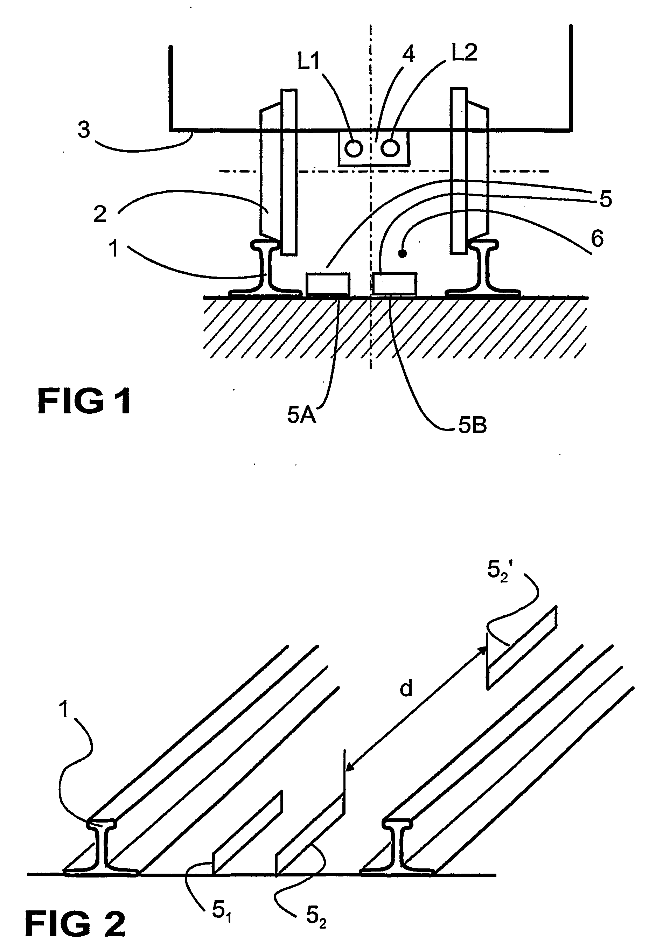

Figur 1 zeigt die Lage der Doppelantennen 4 bzw. 5 an einem Fahrzeug 3 und im Gleisbereich 6. Unter dem Begriff Doppelantenne ist eine Antenne zu verstehen, die selektiv auf die vorstehend genannten zwei Polarisationsrichtungen «vertikal» und «horizontal» ausgebildet ist. Die Angabe «vertikal» bzw. «horizontal» impliziert die vorstehend genannte relative Lage $\alpha = 90°$ der beiden Polarisationsebenen. Wie jedoch bereits ausgeführt, sind die Polarisationsebenen vorzugsweise im obgenannten Bereich geneigt. Die Doppelantenne 4 weist zwei Leiter L1 und L2 auf, durch die ein polarisiertes elektromagnetisches Feld abgestrahlt wird.

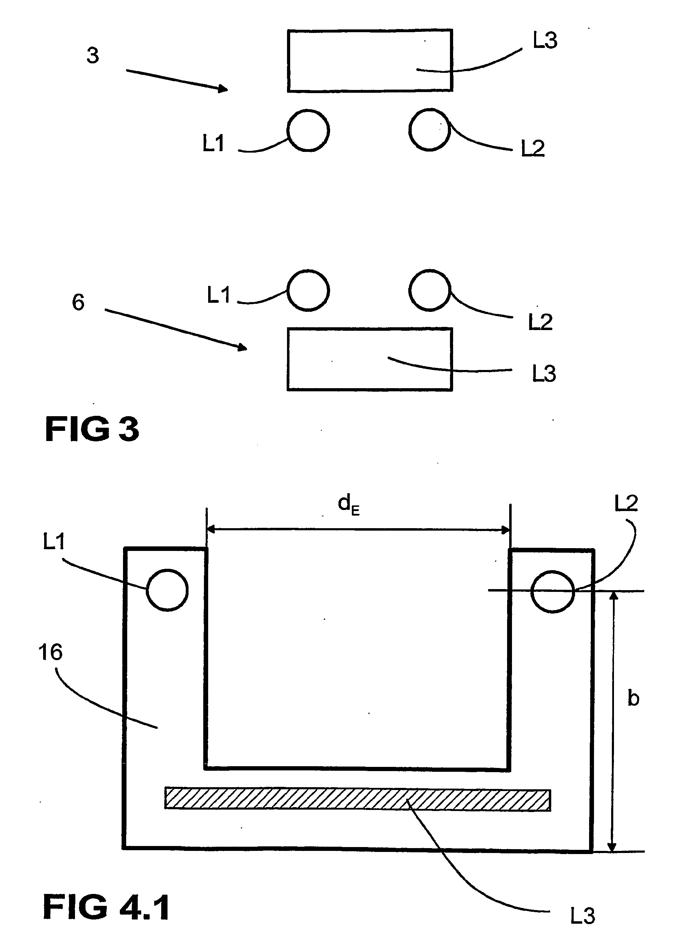

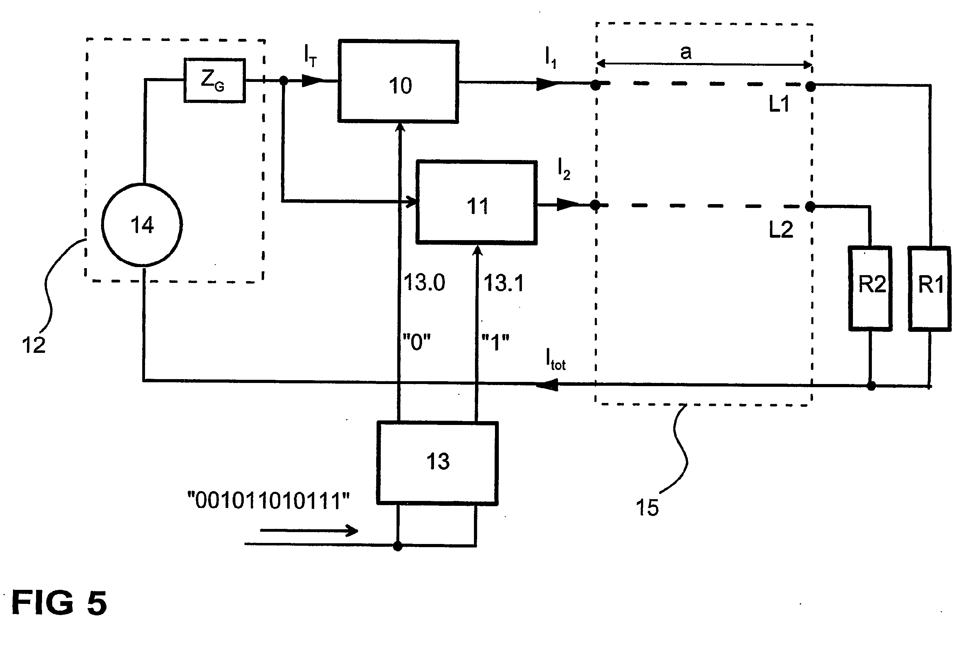

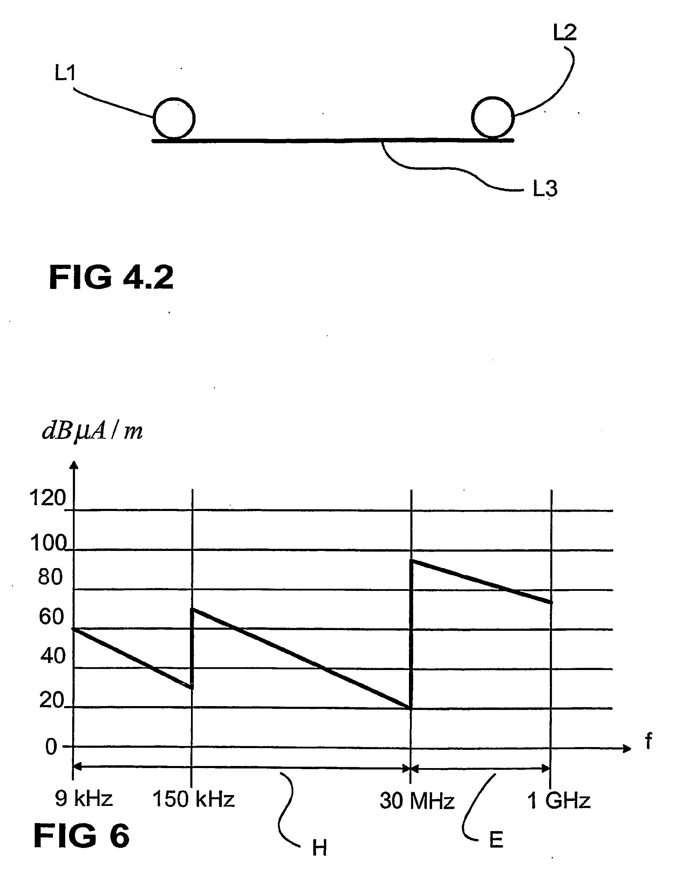

Zur Erläuterung der Ausgestaltung der Doppelantennen wird nun auf die Figuren 3, 4.1 und 4.2 Bezug genommen. Die Figur 3 ist selber eine schematische Seitenansicht der im Schaltbild gemäss der Figur 5 dargestellten Antennenanordnung mit den Bezugszeichen L1 und L2. Zwei mögliche konstruktive Ausgestaltungen zeigen die Figuren 4.1 und 4.2.

Die Leiter L1 und L2 sind zwei unabhängige elektrisch leitende Metallteile. In einer praktischen Ausgestaltung sind diese Leiter L1 und L2 vorzugsweise als Stab oder als ähnliche Profile ausgebildet. Der Leiter L3 wirkt als gemeinsamer Rückleiter oder als Ground-Fläche. Der Leiter L3 kann wie die Leiter L1 und L2 auch als Profil ausgeführt sein werden, da nur die gute elektrische Leitfähigkeit der Leiter L1, L2 und L3 für die Aufgabe bzw. Funktion entscheidend sind. Die Distanz dE bestimmt die Güte (geometrischer Abstand L1/L2 zur Empfängerantenne) der Feldpolarisation von der horizontalen bzw. vertikalen Ebene der Ströme in den Leitern L1 und L2 mit Rückstrom im (flächigen) Leiter L3. In der Figur 4.1 wird beispielhaft eine Realisation mit einem U-Profil gezeigt. Abgesehen von den Leitern L1,L2 und L3 wirkt das U-Profil als Isolation und Träger 16 zur Distanzierung von L1, L2 und L3.

Die Figur 4.2 zeigt die einfachste realisierbare Lösung mit kleinem Abstand L1, L2 gegen den Rückleiter L3. Bei speziellen metallischem Untergrund kann auf den flächigen Leiter L3 sogar verzichtet werden, wenn die elektrische Leitfähigkeit des Untergrundes genügend homogen ist.

Alternativ zur Darstellung gemäss den Figuren 2, 4.1 und 4.2 können im Gleisbereich 6 Doppelantennen gemäss der Figur 3 so ausgestaltet sein, dass in einem Abstand von ca. 5 bis 20 cm zwei Rahmenantennen parallel zu den Schienen angeordnet sind. Dieser Abstand ist in den Fig. 1 und 2 ersichtlich, aber nicht mit einer Variablen bezeichnet. Diese können relativ zur Gleisachse symmetrisch oder asymmetrisch angeordnet sein. Darüber hinaus können längs des Geleises weitere Doppelantennen $5_2'$ in einem Abstand d angeordnet sein. Der Abstand d ist vorzugsweise in einem Bereich von 10m .. 800m. Dadurch können trotz der punktförmigen Übermittlung von Information quasikontinuierlich weitere Informationen übertragen werden, z.B. vor einem Signal. Dadurch kann ein Wechsel des Signalbegriffs schneller auf das Schienenfahrzeug übertragen werden.

Eine Schaltungsanordnung zur Implementierung des erfindungsgemässen Verfahrens zeigt Figur 5. Ein zu übertragender Bitstrom «001011010111» wird einer Bit 0 / Bit 1 Trennschaltung 13 zugeführt, die im folgenden kurz als Separierer 13 bezeichnet wird. Auf den Leitungen 13.0 und 13.1 wird nun in Echtzeit je einem Phasenschieber 10 und 11 die Information zugeführt, ob zum jeweiligen Zeitpunkt ein Bit 0 bzw. Bit 1 zu übertragen ist. Das Trägersignal $I_T$ für die beiden Phasenschieber 10 bzw. 11 wird in einer Quelle 12 erzeugt, die in einer Schemadarstellung einen Generator 14 und eine Quellimpedanz $Z_G$ enthält. Den Phasenschiebern 10 und 11 ist je eine Phasenverschiebung $\varphi_1$ und $\varphi_2$ zugeordnet. Dabei sind nicht nur $\varphi_1 \neq \varphi_2$, sondern die resultierende Polarisation sollte bezüglich des Winkels $\alpha$ den vorstehend erwähnten Bereich 45° < $\alpha$ < 135° ergeben. Den als Antennen fungierenden Leitern L1 und L2 wird je ein Strom $I_1$ bzw. $I_2$ zugeführt: $I_1 := I_1 (\varphi_1)$ und $I_2 := I_2 (\varphi_2)$.
Über je einen Abschlusswiderstand R1 und R2 bilden diese Leiter L1 / L2 eine Abstrahleinrichtung 15.

Das vom Generator 14 abgegebene Trägersignal, d.h. ein Strom, kann sinusförmig oder auch gespreizt, das heisst DSSS-förmig sein. DSSS steht dabei für Direct Sequence Spread Spectrum. Für das Trägersignal sind folgende Frequenzen bevorzugt:

a) bei Sinusform

$f_T$ = 13.5 MHz, 27.5 MHz oder
$f_T$ = 434 MHz, 868 MHz.
Bei den im Gleisbereich vorhandenen Abmessung erfolgt die Übertragung im Nahfeld, d.h. das H-Feld ist dominant; beim zweiten Bereich aus dem ISM-Band gemäss EN 55011 erfolgt die Übertragung im Fernfeld, d.h. das E-Feld ist dominant.

Nachfolgend ist die Wirkung der Polarisation anhand von angenommenen Strömen für eine symmetrische Anordnung eines Messpunktes P zwischen den beiden Leitern L1 und L2 gemäss der Tabelle 1 gezeigt; dabei wird eine Frequenz unterhalb von 30 MHz angenommen.

Tabelle 1

Für insgesamt drei Wertepaare des Stromes in den Leitern L1 und L2 ist die gesamte (skalare) Feldstärke H sowie die Feldstärke gemäss einer Modellrechnung in den beiden Polarisationsrichtungen «vertikal» und «horizontal» gezeigt.

Tabelle 2

|  | x | y | Strom [A] | H[A/m] | H_ver [A/m] | H_horiz [A/m] |
|---|---|---|---|---|---|---|
| L1 | 0,75 | 0,015 | 0,011 | 3,717E-03 | 2,959E-03 | -2,249E-03 |
| L2 | 0 | 0,015 | 0,011 | 3,717E-03 | -2,959E-03 | -2,249E-03 |
| P |  |  |  | 7,434 E-03 | 0 | -4,498 E-03 |
| L1 | 0,75 | 0,015 | 0,011 | 3,7176E-03 | 2,959E-03 | -2,249E-03 |
| L2 | 0 | 0,015 | -0,011 | -3,7176E-03 | 2,959E-03 | 2,249E-03 |
| P |  |  |  | 0 | 5,919E-03 | 0 |
| L1 | 0,75 | 0,015 | 0,011 | 3,717E-03 | 2,959E-03 | -2,249E-03 |
| L2 | 0 | 0,015 | -0,005 | -1,689E-03 | 1,345E-03 | 1,022E-03 |
|  |  |  |  | 2,028E-03 | 4,305E-03 | -1,227E-03 |

b) DSSS-Träger

Für eine Übertragung im Nahbereich ist der Frequenzbereich vorzugsweise so zu wählen, dass nach erfolgter Spreizung die auftretenden Frequenzen höchstens eine Grössenordnung von f = 30 MHz erreichen; dies entspricht einer Mittenfrequenz von f = 15 MHz .

Fig. 6 zeigt qualitativ den gemäss der Norm EN 50121-2 höchstzulässigen Grenzwert der Störaussendung in einer Bahnumgebung, bei der die Fahrdrahtspannung wahlweise 15 kV AC oder 3 kV DC oder 1.5 kV DC beträgt. Wie bereits ausgeführt, ist dieser Grenzwert in 10m Distanz von der Gleismitte von einem Fahrzeug einzuhalten. Bei 10m Messentfernung bedeutet dies, dass die Messung unterhalb von 5 MHz im Nahfeldbereich stattfindet, das heisst hier dominiert das magnetische H-Feld. Das erfindungsgemässe Verfahren erlaubt nun, auch ein magnetisches Störfeld in unmittelbarer Nähe der Quelle, d.h. im Gleisbereich zu messen. Ein auf diese Weise gemessene Feldstärke kann nun benutzt werden, um durch eine Immunitätsprüfung mit einem Mehrfachen m der gemessenen Feldstärke durchzuführen. Vorzugsweise werden für den vorgenannten Faktor m die Werte 1.5, 2, 3, .. 20 vorgesehen.

Die Erfindung ist nicht auf die vorstehend beschriebene Ausführungsform beschränkt. Weitere Ausführungsformen können beispielsweise beinhalten:

- Variable Zuordnung der Phasenwinkel $\varphi_1$' $\varphi_2$;
- andere Formen des Trägersignals, z.B. eine Pulsung, dabei sind in einer Spektrumsbetrachtung die Formen so anzupassen, dass die Übertragung innerhalb der zugelassenen Frequenzbereich erfolgt; "frei" unterhalb 30 MHz, oberhalb in den ISM-Bändern.

**Liste der verwendeten Bezugszeichen**

| 1 | Schiene |
|---|---|

1        Schiene
2        Rad
3        Fahrzeug; Fahrzeugbereich; Fahrzeugkasten
4        Doppelantenne am Fahrzeug, Fahrzeugantenne
5        Doppelantenne im Gleisbereich, ortsfeste Antenne
5A, 5B   verschiedene mögliche Lagen der ortsfesten Doppelantenne im Gleisbereich 6
$5_1$, $5_2$   Rahmenantennen im Gleisbereich 6
6        Gleisbereich
7        Abstrahleinrichtung
10       Phasenschieber für Bit 0
11       Phasenschieber für Bit 1
12       Quelle für Trägersignal
13       Bit 0 / Bit 1 Trennschaltung; Separierer
13.0     Leitung zur Übertragung der Information Bit 0
13.1     Leitung zur Übertragung der Information Bit 1

| 14 | Generator |
|---|---|
| 15 | Abstrahleinrichtung |
| 16 | Träger- und/oder Isolationsmaterial |

| $\alpha$ | relative Lage zweier Polarisationsebenen |
|---|---|
| a | Abstrahllänge der Leiter L1, L2 |
| b | Abstand der Leiter L1, L2 gegenüber Ground (Fahrzeug oder Gleisbereich) |
| A | stark asymmetrische Lage einer Rahmenantenne im Gleisbereich |
| B | schwach asymmetrische Lage einer Rahmenantenne im Gleisbereich |
| d | Abstand zweier hintereinander im Gleisbereich 6 angeordneter Rahmenantennen |
| $d_E$ | Abstand zweier Leiter L1 und L2 |
| f | Frequenz |
| $f_T$ | Trägerfrequenz |
| $\varphi_1, \varphi_2$ | den Phasenschiebern 10, 11 zugeordnete Phasenwinkel |
| $\lambda$ | Wellenlänge einer Frequenz f korrespondierend |
| $I_1, I_2, I_{tot}$ | Ströme in Funktion der Zeit |
| L1, L2 | Leiter |
| L3 | flächiger Leiter, leitende Fläche |

**Liste der verwendeten Abkürzungen**

| DSSS | Direct Sequence Spread Spectrum Technik |
|---|---|
| ISM-Band | Von der Regulierung zugelassenes Frequenzband für «Industrial, Scientific, Medical equipement». |

**Patentansprüche**

1. Verfahren zur Datenübertragung zwischen einem Fahrzeug (3) und einem festen Streckenpunkt (6) mittels eines elektromagnetischen Feldes im Nahfeld, wobei die zu übertragenden Daten als digitaler Bitstrom («0010110.. ») vorliegen und der Bitstrom («0010110.. ») durch eine Modulation der Polarisation des elektromagnetischen Feldes übertragen wird;
**dadurch gekennzeichnet, dass**
für jeden der beiden möglichen Werte eines Bits («0», «1») aus dem Bitstrom («0010110.. ») in einer zur Übertragungsrichtung (d) orthogonalen Polarisationsebene (E) je eine Polarisationsrichtung ($\alpha$, V, H) zugeordnet ist.

2. Verfahren nach Anspruch 1;
**dadurch gekennzeichnet, dass**
das Vorhandensein eines Wertes eines Bits («0», «1») durch die Amplitude in der betreffenden Polarisationsrichtung ($\alpha$, V, H) dargestellt ist.

3. Verfahren nach Anspruch 1 oder 2;
**dadurch gekennzeichnet, dass**
ein Trägersignal ($I_T$) aus einer Quelle (12) zwei Phasenschiebern (10, 11) zugeführt wird, wobei je einem Phasenschieber (10, 11) die Information des Vorhandenseins von Bit 0 oder von Bit 1 zugeführt wird und dass die Polarisation durch Überlagerung der von den Phasenschiebern (10, 11) an eine Antenne abgegebenen Ströme ($I_1, I_2$) gebildet wird.

4. Verfahren nach Anspruch 3,
**dadurch gekennzeichnet, dass**
die Phasenschieber (10, 11) das zugeführte Trägersignal um je einen festen Phasenwinkel $\varphi_1, \varphi_2$ in der Phasenlage schieben.

5. Verfahren nach Anspruch 4,
**dadurch gekennzeichnet, dass**
den Phasenschiebern (10, 11) Phasenwinkel $\varphi_1, \varphi_2$ mit den Werten 0° und 180° zugeordnet sind.

**6.** Verfahren nach einem der Ansprüche 3 bis 5,
**dadurch gekennzeichnet, dass**
das Trägersignal ($I_T$) sinusförmig ist.

**7.** Verfahren nach einem der Ansprüche 3 bis 5,
**dadurch gekennzeichnet, dass**
dass Trägersignal ($I_T$) einer Direct Sequence Spread Spectrum Quelle (12) entstammt.

**8.** Verfahren nach einem der Ansprüche 3 bis 7;
**dadurch gekennzeichnet, dass**
die Quelle (12) temporär durch ein elektromagnetisches Feld mit Energie versorgt wird.

**9.** Verfahren nach Anspruch 1;
**dadurch gekennzeichnet, dass**
an der Empfangsstelle die Feldstärken des magnetischen Feldes vektoriell gemessen werden, um diese Werte als Feldstärkenbasis für eine nachfolgende Immunitätsprüfung von elektrischen Komponenten im Gleisbereich (6) oder am Fahrzeug (3) heranzuziehen.

**10.** Verfahren nach Anspruch 9;
**dadurch gekennzeichnet, dass**
die Werte mit einem Faktor (1.5x,2x, .., 20x) multipliziert und das resultierende Produkt als Feldstärkenbasis heranzuziehen.

**Claims**

**1.** Method for transmitting data between a vehicle (3) and a fixed point on a track (6) by means of an electromagnetic field in the near field, with the data to be transmitted being present in the form of a digital bit stream («0010110.. ») and the bit stream («0010110.. ») being transmitted by means of a modulation of the polarisation of the electromagnetic field,
**characterised in that**
a polarisation direction ($\alpha$, V, H) is assigned in each case to each of the two possible values of a bit («0», «1») from the bit stream («0010110.. ») in a polarisation plane (E) that is orthogonal to the transmission direction (d).

**2.** Method according to claim 1,
**characterised in that**
the presence of a value of a bit («0», «1») is represented by means of the amplitude in the relevant polarisation direction ($\alpha$, V, H).

**3.** Method according to claim 1 or 2,
**characterised in that**
a carrier signal ($I_T$) from a source (12) is supplied to two phase shifters (10, 11), with the information as to the presence of bit 0 or bit 1 being supplied to one phase shifter (10, 11) in each case, and **in that** the polarisation is formed by overlaying of the currents ($I_1$, $I_2$) emitted to an antenna by the phase shifters (10, 11).

**4.** Method according to claim 3,
**characterised in that**
the phase shifters (10, 11) in each case shift the supplied carrier signal by a fixed phase angle $\varphi_1$, $\varphi_2$ in the phase position.

**5.** Method according to claim 4,
**characterised in that**
the phase shifters (10, 11) are assigned phase angles $\varphi_1$, $\varphi_2$ having the values 0° and 180°.

**6.** Method according to one of claims 3 to 5,
**characterised in that**
the carrier signal ($I_T$) is sinusoidal.

**7.** Method according to one of claims 3 to 5,
**characterised in that**
the carrier signal ($I_T$) originates from a Direct Sequence Spread Spectrum source (12).

**8.** Method according to one of claims 3 to 7,
**characterised in that**
the source (12) is temporarily supplied with energy by means of an electromagnetic field.

**9.** Method according to claim 1,
**characterised in that**
at the receiving point the field strengths of the magnetic field are measured vectorially in order to use said values as a field strength basis for a subsequent immunity testing of electrical components in the track area (6) or on the vehicle (3).

**10.** Method according to claim 1,
**characterised in that**
the values are multiplied by a factor (1.5x, 2x, .., 20x) and the resulting product is used as a field strength basis.

**Revendications**

**1.** Procédé de transmission de données entre un véhicule (3) et un point (6) fixe de voie au moyen d'un champ électromagnétique en champ proche, dans lequel les données à transmettre se présentent sous la forme d'un flux de bits ( « 0010110... ») numérique et le flux de bits ( « 0010110... ») est transmis par une modulation de la polarisation du champ électromagnétique, **caractérisé en ce que**
pour chacune des deux valeurs possibles d'un bit (« 0 », « 1 ») du flux de bits ( « 0010110... ») dans un plan E de polarisation orthogonal à la direction (d) de transmission est affecté respectivement une direction ($\alpha$ V, H) de polarisation.

**2.** Procédé suivant la revendication 1, **caractérisé en ce que**
la présence d'une valeur de bit ( « 0010110... ») est représentée par l'amplitude dans la direction ($\alpha$ V, H) de polarisation concernée.

**3.** Procédé suivant la revendication 1 ou 2, **caractérisé en ce que,**
on envoie un signal ($I_T$) porteur à partir d'une source (12) à deux déphaseurs (10, 11), l'information de la présence du bit ou du bit 1 étant envoyée à respectivement à un déphaseur (10, 11) et **en ce que** l'on forme la polarisation par superposition des courants ($I_1$, $I_2$) envoyés par les déphaseurs (10, 11) à une antenne.

**4.** Procédé suivant la revendication 3, **caractérisé en ce que,**
les déphaseurs (10, 11) déphasent dans la position de phase le signal porteur envoyé de respectivement un angle $\varphi_1$, $\varphi_2$ de phase fixe.

**5.** Procédé suivant la revendication 4, **caractérisé en ce que,** des angles $\varphi_1$,$\varphi_2$ de phase ayant les valeurs 0° et 180°, sont associés aux déphaseurs (10, 11).

**6.** Procédé suivant l'une des revendications 3 à 5, **caractérisé en ce que** le signal ($I_T$) porteur est sinusoïdal.

**7.** Procédé suivant l'une des revendications 3 à 5, **caractérisé en ce que,** le signal ($I_T$) porteur provient d'une source (12) Direct Sequence Spread Spectrum.

**8.** Procédé suivant l'une des revendications 3 à 7, **caractérisé en ce que** la source (12) est alimentée temporairement en énergie par un champ électromagnétique.

**9.** Procédé suivant la revendication 1, **caractérisé en ce que** les intensités du champ magnétique sont mesurés vectoriellement au point de réception pour tirer partie de ces valeurs comme base d'intensités de champ pour un contrôle d'immunité venant ensuite de composants électriques dans la zone (6) de la voie ou sur le véhicule (3).

**10.** Procédé suivant la revendication 9, **caractérisé en ce que** l'on multiplie les valeurs par un facteur (1,5x, 2x, ...,

20x) et on tire partie du produit résultant en tant que base d'intensités de champ.

**FIG 1**

**FIG 2**

3

L3

L1    L2

6

L1    L2

L3

**FIG 3**

$d_E$

L2

L1

16

b

L3

**FIG 4.1**

**FIG 5**

**FIG 4.2**

**FIG 6**